(19) Europäisches Patentamt
European Patent Office
Office européen des brevets

(11) Publication number: **0 034 722**
**B1**

(12) **EUROPEAN PATENT SPECIFICATION**

(45) Date of publication of patent specification: **26.09.84**

(51) Int. Cl.$^3$: **C 09 D 5/32,** C 09 D 5/00

(21) Application number: **81100653.5**

(22) Date of filing: **29.01.81**

(54) **Coating composition and process for adhering a curable composition to a substrate.**

(30) Priority: **29.01.80 JP 9511/80**

(43) Date of publication of application:
**02.09.81 Bulletin 81/35**

(45) Publication of the grant of the patent:
**26.09.84 Bulletin 84/39**

(84) Designated Contracting States:
**BE DE FR GB IT NL**

(56) References cited:
**BE-A- 632 607**
**FR-A-1 259 536**
**FR-A-2 353 500**
**US-A-3 992 339**

(73) Proprietor: **KANEGAFUCHI KAGAKU KOGYO KABUSHIKI KAISHA**
**2-4 Nakanoshima 3-chome**
**Kita-ku Osaka-shi (JP)**

(72) Inventor: **Kawakubo, Fumio**
**1-68-404, 6-chome, Nishiochiai Suma-ku**
**Kobe-shi Hyogo-ken (JP)**
Inventor: **Hirose, Toshifumi**
**2-9, 1-chome, Yoshida-cho Hyogo-ku**
**Kobe-shi Hyogo-ken (JP)**
Inventor: **Minokami, Tadashi**
**Sanseiso, 96-1 Aza-Takigahira Shioya-cho**
**Tarumi-ku Kobe-shi Hyogo-ken (JP)**
Inventor: **Hosaka, Miyako**
**1-57, Nakajiyuugaoka Shijimi-cho**
**Miki-shi Hyogo-ken (JP)**
Inventor: **Isayama, Katsuhiko**
**8-7, 4-chome, Tsukushigaoka Kita-ku**
**Kobe-shi Hyogo-ken (JP)**

(74) Representative: **Vossius Vossius Tauchner Heunemann Rauh**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 034 722 B1

## Description

This invention relates to a coating composition (primer composition) and more specifically, to a primer composition which inhibits degradation of a rubber or a resin-containing composition coated on the surface of a substrate, in particular glass to maintain a firm weather-resistant adhesion to said substrate over a long period of time.

In recent years, elastic sealants have shown a marked advance and gained widespread acceptance in automobiles, buildings, etc. Examples of these sealants are silicone resins, modified silicone, polysulfide elastomers (thiokol polysulfides) and polyurethane resins. However, their performance is not entirely satisfactory and in particular when applied to glass they do not permit adhesion over a long period.

Coating compositions comprising a film former and an ultraviolet absorber are known e.g. from FR—A—2 353 500 and BE—A—632 607. However in these known compositions the ultraviolet absorber is contained only in minor amounts.

This means that these compositions are not concerned with the protection of the sealant applied to the surface of the primer film against light but with the protection of the primer itself. Particularly when the primer is used on glass the amount of light which penetrates the glass, the primer and then reaches the inner surface of the sealant destroys the adhesion of the sealant.

It is an object of this invention to provide a coating composition capable of improving the weather-resistant adhesion of a sealant coated on a substrate, in particular on glass. The present coating composition may be used to form an undercoating film (primer) onto which various kinds of paints or sealants may be coated. More pronounced effects can be expected when the undercoating is applied to sealants on the basis of modified silicone type, polyurethane type or polysulfide type resins. Such resins are commercially available and illustrated e.g. in JIS (Japanese Industrial Standard) A5758.

According to this invention, there is provided a coating composition comprising a film former and an ultraviolet absorber and optionally a pigment and/or dye. This composition is cable of absorbing light having a wavelength of not more than 380 nm and is characterized in that said film former is a silicon-modified diallylphthalate prepolymer, a silicon-modified epoxy resin, a silicon-modified acrylic polymer or a mixture thereof.

There is also provided a process for improving the weather-resistant adhesion of a cured coating to a substrate, in particular to glass, which consists in applying a coating composition comprising a film-former and an ultraviolet absorber onto a substrate, in particular onto glass to form a film (primer layer) capable of absorbing light having a wavelength of not more than 380 nm, and thereafter applying a curable composition on top of the primer layer and curing said top coat.

The invention is described in detail below with reference to Figure 1 which shows the ultraviolet and visible spectra of the coating compositions obtained in Examples 1 to 3.

By using the coating composition of this invention it is possible to simultaneously meet two otherwise incompatible requirements: It is possible to maintain high weather-resistant adhesion of a sealant and to retain transparency which is particularly important in the case of application to glass. The present coating composition essentially comprises a film former, an ultraviolet absorber, optionally a pigment and/or dye, and a solvent.

The most preferred film former silicon-modified diallyl phthalate prepolymers or silicon-modified epoxy resins. In the present specification the term "silicon-modified" means that a backbone polymer such as an acrylic polymer, a diallylphthalate polymer or an epoxy resin is modified by reaction with a compound having at least one hydrolyzable silyl group such as hydrosilanes containing e.g. an alkoxy group, aminoxy group, mercapto group and so forth, or silane coupling agents. The polymer so modified is hydrolyzable. The oligomers may be used alone or in combination with each other preferably in an amount of 50—100% by weight, more preferably of 50—95% by weight, based on the film former. The film former is used in an amount sufficient to dissolve the ultraviolet absorber. The amount varies depending on the kind of film former, the ultraviolet absorber and the other additives employed. Generally the amount of the film former is 50—99% by weight, preferably 60—90% by weight, of the solid components.

Silicon-modified diallylphthalates can be prepared by reacting commercially available diallylphthalate, e.g. DAISO DAP® (made by Osaka Soda Co. Ltd) with a compound having hydrolyzable groups bonded to a silicium atom, such as trimethoxyhydrosilane, in a solvent. The reaction is effected in the presence of a platinum catalyst using 0.1—1.2 mol equivalent of the silane per pendant double bond of the prepolymer. This modification method and the modified polymers are described in Japanese Unexamined Patent Publication 37184/1979. Silicon-modified diallyl phthalates are the preferred film formers of the present invention in view of their rapid drying and their excellent compatability with many kinds of ultraviolet absorbers as well as their excellent adherence to substrates such as glass or metal.

Silicon-modified epoxy resins can be prepared by various methods. The resin best suited for the present purpose is prepared by reacting a compound which on average has at least two epoxy groups per molecule with a silicon compound containing groups which are reactive with the epoxy groups, such as gamma-mercapto-propyltrimethoxysilane. Silicon-modified epoxy resins and methods for their

preparation are described in Japanese Patent Application No. 100161/1980.

Silicon-modified acrylic oligomers and their preparation are described in Japanese Unexamined Patent Publications 139695/1978 and 36395/1978. These modified compounds are prepared by copolymerizing an acrylic monomer, such as an alkyl acrylate or alkyl methacrylate optionally containing other vinyl monomers, with monomers having both acrylic or vinyl groups and silicium-bonded hydrolyzable groups, or by reacting a vinyl or acrylic polymer or a copolymer having pendant allylic carbon-carbon double bonds with a compound having silicium-bonded hydrolyzable groups in the presence of a platinum catalyst.

In order to increase adhesion the film former may further contain a polyisocyanate, silicon-modified polyisocyanate, silane coupling agent, reaction product of silane coupling agents and mixtures thereof in a lower amount than the above described resins.

It is sufficient to simply add such a silane coupling agent to the above film former. Alternatively the film former may be used after it has reacted with the functional groups of the silane coupling agent whereby a modified film former is obtained. Examples of reaction mixtures of the silane coupling agents are commercial primers, preferably those described in Japanese Patent Publication 8854/1977 and most preferred is a reaction mixture of an amine silane with an acrylsilane.

These reaction products can be prepared by reaction of the non-silicon functional groups present in two or more silane coupling agents, partial hydrolysis with functional silicon groups or other functional groups, or of their mixtures. Preferred products are for instance the reaction products of gamma-glycidoxypropyl-trimethoxy silane or gamma-methacryloxypropyltrimethoxy silane and N-beta-(aminoethyl)-gamma-aminopropyltrimethoxy silane as shown in the above references.

Silicon-modified polyisocyanates are illustrated for instance in Japanese Unexamined Patent Publication 17519/1977. The most suitable silicon modified polyisocyanates for the inventive composition is prepared by a modification reaction of a polyisocyanate with a reactive silicon compound in such a manner that none of the free isocyanate groups is left after the reaction. Such modified polyisocyanates are described in Japanese Unexamined Patent Publication No. 17519/1977 and 19015/1979.

The above silicon-modified compounds may be used in an amount of preferably 0—60% by weight, more preferably 5—50% by weight, based on the film former. In addition to these silicon-modified compounds the presence of a rubbery polymer may further increase the adhesion of the sealants. Rubbery polymers are for instance chloroprene rubber, nitrile rubber and chlorinated rubber.

It should be noted that when applied to the surface of glass or even more effectively to a metal such as aluminum, the so-called modified silicones which belong to the class of the rubbery polymers increase the adhesion of the sealants remarkably. The rubbery polymer may be used in an amount of preferably 0 to 30% by weight, more preferably 2 to 20% by weight, based on the film former.

Examples of ultraviolet absorbers include benzophenones such as 2,4-dihydroxybenzophenone, 2-hydroxy-4-methoxybenzophenone, 2 - hydroxy - 4 - hydroxybenzylbenzophenone, 2-hydroxy-4-octoxybenzophenone and 2,2′,4,4′-tetrahydroxybenzophenone; benzotriazoles such as 2-(2′-hydroxy-5-methylphenyl)-benzotriazole, 2-(2′-hydroxy-3′,5′-di-tert-butylphenyl)-5-chlorobenzotriazole and 2-(2′-hydroxy-3′,5′-di-tert.-amylphenyl)-benzotriazole; salicylates such as p-tert.butylphenyl salicylate; substitued nitriles such as ethyl 2-cyano-3,3-diphenyl acrylate and 2-ethylhexyl 2-cyano-3,3-diphenyl acrylate; and metal chelate compounds such as nickel di-n-butyl dithiocarbamate and nickel diamyl dithiocarbamate. These ultraviolet absorbers may be used alone or in combination with each other.

Primer compositions of this invention containing benzophenones or metal chelate compounds as ultraviolet absorbers are especially effective when a modified silicone or a polysulfide or a polyurethane or an isocyanate prepolymer is used as curable composition. The modified silicones as herein referred to, are described in Japanese Industrial Standard, and denote curable polymers e.g. a polymer obtained by introducing hydrolyzable silyl groups into an organic polymer such as a polyether. As regards polymers of the modified silicone type and their preparattion references is made to Japanese Unexamined Patent Publication 36317/1970 and Japanese Unexamined Patent Publication 73998/1977.

The amount of the ultraviolet absorber may be adjusted according to the purpose and the kind of the primer. Usually its concentration in the primer solution is at least 0.5% by weight. The amount of the UV-absorber may be in the range of 0.5 to 35% by weight, preferably 3 to 30% by weight, based on the solid components.

When a primer solution containing such a film former and such an ultraviolet absorber is applied to the surface of a substrate such as glass once or several times, a film is formed which can absorb light having a wavelength of not more than 380 nm. As a result of this film formation, light having a wavelength of below 380 nm should preferably not be transmitted (T = 0%) to the glass surface. However, if T is approximately not more than 10%, the primer layer proves to be effective in maintaining weather-resistant adhesion. On the other hand, the primer must retain transparency for visible light. Transparency can be ensured by forming the primer film in such a manner that it has an absorption wavelength band having a light transmittance of at least 5%, preferably at least 30%, in a wavelength region of preferably 380 to 700 nm, at least 410 to 700 nm. The light transmittance can be very easily determined experimentally if the components of the primer composition and its mode of use are

specified. The film thickness is preferably between 0.1 and 300 μm.

It is possible to adjust color hues and to further increase the weather-resistant adhesion of the cured coating by including various pigments and/or dyes in the composition of this invention. Examples of pigments are inorganic pigments such as chromic acid salts, ferro-cyanides, sulfides, sulfates, oxides (e.g. titanium white, red iron oxide), double oxides (e.g. titanium yellow), hydroxides, carbonates, silicic acid, carbon (carbon black), and metal powders, and organic pigments such as nitroso compounds, nitro compounds, azo compounds, condensed azo compounds, quinacridone compounds, isoindolinone compounds, anthraquinone compounds and phthalocyanine compounds. As dyes oil-soluble dyes may be used. These pigments and dyes may be used alone or in combination with each other, and it is possible to shield a desired proportion of light of a desired wavelength in the visible region.

To save work when coating the pigment or dye is suitably used in amounts at least 0.1% by weight, based on the primer solution. The pigment and/or dye content of the solid components usually is 0.5 to 35% by weight, preferably 3 to 30% by weight. Since the pigment or dye has its own absorption wavelength band care must be taken in determining its amount to ensure that the primer film retains its transparency. In view of this it is preferable to employ pigments and/or dyes having a specific absorption wavelength band of 400 to 500 nm.

An organic solvent is required as a further component of the coating composition. The organic solvent may be any organic solvent which dissolves the film former, the ultraviolet absorber and the dye, disperses the pigment and is inert to each of these components. Specific examples for organic solvents which may be used are aliphatic hydrocarbons such as n-hexane and cyclohexane, aromatic hydrocarbons such as benzene, toluene, xylene and chlorobenzene, ketones such as acetone and methyl ethyl ketone, esters such as ethyl acetate and butyl acetate, and alcohols such as methanol and ethanol. These solvents may be used alone or in combination with each other. If desired, the organic solvent may be subjected to a dehydrating treatment.

The organic solvent should be used in an amount of 30 to 95% by weight, preferably 55 to 85% by weight per 5—70% by weight of the solid components of the coating composition. If the amount is less than 30% by weight, the viscosity of the coating composition becomes too high, and both the operability and storage stability of the coating composition are impaired. If it is used in an amount of more than 95% by weight, the film former and the ultraviolet absorber cannot be incorporated into the coating composition in the desired amounts with the result that the object of this invention cannot be achieved.

There is no particular restriction as to the method of preparing the coating composition. The individual components may be added all at once or portionwise to an organic solvent to dissolve them, or a solution of the film former in an organic solvent may be prepared first and the remaining components may be dissolved or dispersed in the solution. The pigment may be first kneaded and dispersed in the film former by means of e.g. a three-roll mill, a ball mill or a high-speed rotary mixer, and then dispersed in the solvent. A processed pigment may be dispersed effectively in the solvent by a high-speed rotary mixer, etc. In order to increase the storage stability of the coating composition, a dehydrating agent e.g. a molecular sieve may be added.

The coating composition of the present invention can be effectively used in improving the weather-resistant adhesion of a coating of curable compositions of various types.

The following examples illustrate the present invention more specifically, parts being by weight unless otherwise specified.

### Reference Example 1

350 g of a diallylphthalate prepolymer (DAISO DAP L®, a tradename for a product of Osaka Soda Co., Ltd.), are dissolved in 500 g of toluene. Then 0.15 ml of an isopropanol solution containing 10% by weight of hexachloroplatinic acid and 150 g of trimethoxysilane are added and reacted at 90°C for 4 hours. Infrared spectral analysis shows that the absorption due to the carbon-carbon double bonds present in the starting material disappears in the resulting resin, and its iodine value is less than 4. Hence, it is assumed that the prepolymer has a structure in which trimethoxysilane is attached to more than 95% of the double bonds present in the starting material. The product is a silicon-modified diallylphthalate prepolymer.

### Reference Example 2

A liquid mixture of 30 g styrene, 16 g allyl methacrylate, 20 g methyl methacrylate, 19 g n-butyl methacrylate, 14 g butyl acrylate, 1 g acrylic acid and 2 g n-dodecyl mercaptan is added dropwise to 300 g toluene, heated at 90°C, and reacted for 10 hours to give a vinyl copolymer containing allyl groups and having a molecular weight of 8,000. To the resulting vinyl copolymer solution (100 g) is added a solution of 3.5 g of methyldimethoxysilane and 0.01 ml of the isopropanol-hexachloroplatinic acid solution. The mixture is reacted at 90°C for 6 hours in a sealed vessel. From the infrared spectral analysis according to Reference Example 1, it is assumed that the resulting polymer has a structure in which the dimethoxysilane groups are attached to more than 95% of the double bonds present in the starting material.

Reference Example 3

To a solution of 122 g of Epikote® 834 x 90, in 183 g toluene are added 1 g of 2,4,6-tris(dimethylaminomethyl) phenol and 86 g of $HS(OCH_2)_3Si(OCH_3)_3$ (A-189®, Japan Unicar Co., Ltd). Epikote 834 is a liquid epoxy resin, i.e. a reaction product of epichlorohydrin and bisphenol A.

Then the resultant mixture is allowed to react at 110°C for 2 hours under nitrogen atmosphere. The product is an epoxy resin modified with a silicon.

Reference Example 4

A mixture of 100 g

$$H_2NCH_2CH_2NH(CH_2)_3Si(OCH_3)_3 \text{(A-1120®)}$$

and 113 g

$$CH_2 = CH(CH_3)CO_2(CH_2)_3Si(OCH_3)_3 \text{(A-174®)}$$

is allowed to react at 130°C for 5 hours under nitrogen atmosphere. The reaction product is a silane coupling agent.

Reference Example 5

To a solution of 100 g of a Desmodur® HL polyisocyanate (manufactured by Sumitomo-Bayer Urethan) in 70 g ethylacetate is added to 50 g of A-189® and 0.5 g of tin-octylate. The mixture is reacted at room temperature for 2 hours. The product is a silicon-modified polyisocyanate.

Examples 1 to 3

A solution is prepared by dissolving 22.5 parts of the silicon-modified diallylphthalate prepolymer obtained in Reference Example 1, 7.5 parts of the silane coupling agent obtained in Reference Example 4 and 3 parts of a silicon-modified polyether (MSP-20A®, made by Kanegafuchi Kagaku Kogyo Co., Ltd.) in a mixture containing 60 parts of toluene and 10 parts of methanol. Each of the ultraviolet absorbers and each of the pigments or dyes shown in Table 1 are added in the amounts indicated in Table 1 to 100 parts of the above solution.

The pigment is dispersed for 5 minutes at 15,000 rpm using a high-speed stirrer (Ace Homogenizer Model AH7®, a product of Nippon Seiki Seisakusho). The resulting primer solutions (coating compositions) are each coated onto one surface of a glass sheet which has a size of 5 cm x 5 cm x 0.5 cm using absorbent cotton, and then air-dried for about 2 hours. The ultraviolet and visible spectra of the resulting primer films are then measured. The results are shown in Figure 1. It is seen that for every primer the transmittance T(%) of light having a wavelength of not more than 380 nm was 0, thus every primer absorbed light having a wavelength of not more than 380 nm. Using a yellow pigment or dye, light having a wavelength of less than 500 nm can also be absorbed. These primers had an absorption wavelength band with a transmittance of more than at least 5% in a region of 380 to 700 nm and were transparent for visible light.

TABLE 1

Composition of Ultraviolet-absorbing Primer

| Components | Primer No. | I | II | III | IV | V | VI | VII |
|---|---|---|---|---|---|---|---|---|
| Ultraviolet absorber | Cyosorb UV 24®*1 | 5 | — | — | 5 | — | — | — |
| | Tinuvin-327® *2 | — | 3 | — | — | 3 | 3 | 3 |
| | NBC *3 | — | — | 6 | — | — | 6 | 6 |
| Pigment or dye | Fuji Yellow #3® *4 | — | — | — | 1 | — | — | — |
| | MICROLITH Yellow 3RT® *5 | — | — | — | — | 3 | 3 | 3 |
| dye | Sudan Black® *6 | — | — | — | — | — | — | 0.1 |

*1: Benzophenone-type made by American-Cyanamide Company.
*2: Benzotriazole-type made by Ciba-Geigy.
*3: Nickel (II) dibutyldithiocarbamate.
*4: Azoic pigment made by Fuji Shikiso.
*5: Isoindolinone-type processed pigment made by Ciba-Geigy.
*6: Black dye made by Chuo Gosei Kagaku Co., Ltd.

Using the primers III, V and VII shown in Table I and the commercially available APZ-730®, (made by Nippon Unicar Co., Ltd.), the weather-resistant adhesion of the sealant shown in Table 2 is evaluated. The results are shown in Table 3 together with those of a comparative example. The evaluation is made in accordance with JIS—A5758 by accelerated exposure of an H-shaped sample to a sunlight long-life weather-O-meter (Model WEL-3HC, a product of Suga Testing Machine Co., Ltd.) followed by a tensile strength test in an autograph (Model IS-5000, a product of Shimazu Seisakusho).

TABLE 2

Formulation of the Composition for Evaluating Weather-resistant Adhesion (*1)

| | Component | Formulation (parts by weight) |
|---|---|---|
| Base | MSP20A® (*2) | 100 |
| | EP—S® (*3) | 45 |
| | Calcium carbonate (CCR) | 110 |
| | Titanium oxide | 10 |
| | DISPARLON 305® (*4) | 6 |
| | Carbon black | 0.5 |
| | Tinuvin-327® | 1.0 |
| | NOCRAC NS—6(*5) | 1.0 |
| Curing agent | Tin octylate | 2 |
| | Laurylamine | 1 |
| | Titanium oxide | 6 |
| | Dioctyl phthalate (DOP) | 18 |

(*1): The base was prepared by kneading the ingredients in a three-roll mill, and the curing agent was prepared by kneading the ingredients in a high-speed stirrer (homogenizer).
(*2): Modified silicone polymer, a product of Kanegafuchi Kagaku Kogyo Kabushiki Kaisha.
(*3): Epoxidized hydrophthalic ester, a product of Shinnippon Rika.
(*4): Hydrogenated castor oil, a product of Kasumoto Chemical Co., Ltd.
(*5): Phenolic antioxidant, a product of Ouchi Shinko.

TABLE 3

| | Primer | Sunlight exposure time (hrs) | 150% modulus (kg/cm²) | Tensile Strength at break (kg/cm²) | Elongation (%) | *2 State of fracture |
|---|---|---|---|---|---|---|
| Comparative Example 1 | APZ-730® *1 | 0 | 2.0 | 6.5 | 690 | Cf |
| | | 180 | 2.3 | 4.1 | 440 | Af |
| | | 360 | 2.4 | 2.5 | 160 | Af |
| | | 540 | — | 1.1 | 50 | Af |
| Example 1 | III | 0 | 2.2 | 7.2 | 710 | Cf |
| | | 180 | 2.4 | 6.9 | 700 | Cf |
| | | 360 | 2.5 | 7.1 | 720 | Cf |
| | | 540 | 2.7 | 7.0 | 690 | Cf |
| Example 2 | V | 0 | 2.3 | 6.9 | 680 | Cf |
| | | 180 | 2.3 | 7.2 | 690 | Cf |
| | | 360 | 2.4 | 7.3 | 710 | Cf |
| | | 540 | 2.6 | 7.1 | 700 | Cf |
| Example 3 | VII | 0 | 2.3 | 6.2 | 610 | Cf |
| | | 180 | 2.4 | 6.7 | 590 | Cf |
| | | 360 | 2.6 | 6.5 | 670 | Cf |
| | | 540 | 2.8 | 6.8 | 670 | Cf |

*1: Primer (silicone type) made by Nippon Unicar Co., Ltd. (Comparative Example 1)

*2: Cf: sealant fracture; Af: interfacial delamination.

It is seen from Table 3 that the ultraviolet-shielding primers of this invention have a great effect on the weather-resistant adhesion of sealants to glass.

Example 4

A solution is prepared by dissolving 22.5 parts of the silicon-modified acrylic oligomer prepared in Reference Example 2, 7.5 parts of the reaction product of silane coupling agents prepared in Reference Example 4, and 3 parts silicon-modified polyether in a mixture of 30 parts toluene, 30 parts ethylacetate and 10 parts methanol. To 100 parts of the resultant solution 6 parts of Uvinul D50® (benzophenone type ultraviolet absorber, made by GAF), 3 parts of Microlith yellow 3GT® (yellow pigment, made by Ciba-Geigy) and 0.1 parts of Varifast Black® (black dye, made by Orient Chemicals) are added to form a primer solution VIII.

Using the primer solution, the weather resistant adhesion on glass of a commercially available modified silicone type sealant, Hamatight Super II® (made by Yokohama Rubber Co., Ltd.) is evaluated in the same manner as in Examples 1—3. The results are shown in Table 4.

TABLE 4

| | Primer | Sunlight exposure time (hrs) | 150% modulus ($kg/cm^2$) | Tensile strength at break ($kg/cm^2$) | Elongation (%) | *2 (as in Table 3) State of fracture |
|---|---|---|---|---|---|---|
| Example 4 | VIII | 0 | 1.0 | 3.7 | 740 | Cf |
| | | 180 | 1.0 | 4.7 | 850 | Cf |
| | | 360 | 1.0 | 4.0 | 800 | Cf |
| | | 540 | 0.9 | 3.9 | 780 | Cf |
| Comparative Example 2 | APZ-730® | 0 | 0.9 | 4.5 | 880 | Cf |
| | | 180 | 0.8 | 2.1 | 560 | Af |
| | | 360 | 0.6 | 1.0 | 340 | Af |
| | | 540 | — | 0.5 | 60 | Af |

Example 5

A solution is prepared by mixing 22.5 parts of the silicon-modified epoxy resin prepared in Reference Example 3 with 7.5 parts of the reaction product prepared in Reference Example 4, 30 parts of toluene, 30 parts of ethyl acetate, 10 parts of methanol. To 100 parts of the solution, 6 parts of Ni (II)-diamyldithiocarbamate, 3 parts Microlith yellow 2 GT® and 0.1 parts of oil black are added to form a primer solution IX. Using the primer IX, the weather-resistant adhesion to glass of the modified silicone sealant, Kanebo P-8000® (made by Kanebo NSC) is evaluated as before. The results are shown in Table 5.

TABLE 5

| | Primer | Sunlight exposure time (hrs) | 150% modulus ($kg/cm^2$) | Tensile Strength at breakage ($kg/cm^2$) | Elongation (%) | *2 (as in Table 3) State of of fracture |
|---|---|---|---|---|---|---|
| Example 5 | IX | 0 | 2.8 | 6.4 | 580 | Cf |
| | | 180 | 3.4 | 6.0 | 520 | Cf |
| | | 360 | 3.7 | 6.3 | 540 | Cf |
| | | 540 | 3.7 | 6.2 | 510 | Cf |

Example 6

A solution is prepared by mixing 22.5 parts of the silicon-modified diallylphthalate prepolymer of Reference Example 1 with 7.5 parts of the silicon-modified polyisocyanate, 3 parts of silicon-modified polyether, 30 parts of toluene, 30 parts of ethyl acetate and 10 parts of methanol. To 100 parts of this primer solution 3 parts of NBC®, 3 parts of Tinuvin 328® (benzotriazole-type ultraviolet absorber, made by Ciba-Geigy), 3 parts of Microlith yellow 3 GT® and 0.1 parts of Sudan black 141® are added to form a primer solution No. X.

Using the primer solution X, the weather-resistant adhesion of the commercially available modified silicone sealant Penguin seal 2500® (made by Sun Star Chemical Co., Ltd.) to glass is evaluated. The results are shown in Table 6.

TABLE 6

| | Primer | Sunlight exposure time (hrs) | 150% modulus ($kg/cm^2$) | Tensile strength at break ($kg/cm^2$) | Elongation (%) | *2 (as in Table 3) State of fracture |
|---|---|---|---|---|---|---|
| Example 6 | X | 0 | 2.7 | 7.5 | 770 | Cf |
| | | 180 | 2.9 | 7.4 | 760 | Cf |
| | | 360 | 3.4 | 7.6 | 780 | Cf |
| | | 540 | 3.7 | 7.5 | 750 | Cf |

**Claims**

1. A coating composition, particularly for glass, comprising a film former and an ultraviolet absorber capable of absorbing light having a wavelength of not more than 380 nm, characterized in that said film former is a silicon-modified diallylphthalate prepolymer, a silicon-modified expoxy resin, a silicon-modified acrylic polymer or a mixture thereof.

2. The composition of claim 1, characterized in that said film former further contains a polyisocyanate, silicon-modified polyisocyanate, silane coupling agent, reaction product of silane coupling agents and mixtures thereof in a lower amount than the compound of claim 1.

3. The composition of any of claims 1 and 2, characterized in that the film former additionally contains a rubbery polymer.

4. The composition of claim 3, characterized in that said rubbery polymer is a silicon-modified polyether.

5. The composition of any of claims 1 to 4, characterized in that the solution further comprises at least 0.1% by weight of a pigment or dye.

6. The composition of any of claims 1 to 5, characterized in that the solution contains the ultraviolet-absorber in an amount of 3 to 30% by weight.

7. A process for adhering a curable composition to a substrate, particularly glass, characterised in that a composition according to any of claims 1 to 6 which comprises a film-former and an ultraviolet absorber is first coated onto the surface of the substrate to form a film capable of absorbing light having a wavelength of not more than 380 nm, and a curable composition is thereafter coated onto the top of the first composition and said composition is cured.

8. The process of claim 7, characterized in that said curable composition is a sealant.

9. The process of claim 8, characterized in that said sealant is a modified silicone type sealant, urethane type sealant or a polysulfide type sealant.

**Patentansprüche**

1. Beschichtungsmittel, insbesondere für Glas, enthaltend einen Filmbildner sowie einen UV-Absorber, der Licht mit einer Wellenlänge von nicht mehr als 380 nm absorbiert, dadurch gekennzeichnet, daß der Filmbildner ein silicium-modifiziertes Diallylphthalat-Prepolymer, ein silicium-modifiziertes Epoxyharz, ein silicium-modifizier-tes Acryl-Polymerisat oder ein Gemisch dieser Komponenten ist.

2. Mittel nach Anspruch 1, dadurch gekennzeichnet, daß der Filmbildner noch ein Polyisocyanat, ein silicium-modifiziertes Polyisocyanat, ein Silan-Kupplungsmittel, ein Reaktionsprodukt von Silan-Kupplungsmitteln sowie ein Gemisch dieser Komponenten in geringerer Menge als die Verbindung von Anspruch 1 enthält.

3. Mittel nach einem der Ansprüche 1 und 2, dadurch gekennzeichnet, daß der Filmbildner zusätzlich ein kautschukartiges Polymerisat enthält.

4. Mittel nach Anspruch 3, dadurch gekennzeichnet, daß das kautschukartige Polymerisat ein silicium-modifizierter Polyäther ist.

5. Mittel nach einem der Ansprüche 1 bis 4, dadurch gekennzeichnet, daß die Lösung weiterhin mindestens 0,1 Gewichtsprozent eines Pigments oder Farbstoffs enthält.

6. Mittel nach einem der Ansprüche 1 bis 5, dadurch gekennzeichnet, daß die Lösung den UV-Absorber in einer Menge von 3 bis 30 Gewichtsprozent enthält.

7. Verfahren zum Aufbringen eines härtbaren Mittels auf ein Substrat, insbesondere Glas, dadurch gekennzeichnet, daß ein Mittel nach einem der Ansprüche 1 bis 6, das einen Filmbildner sowie einen UV-Absorber enthält, zunächst auf die Oberfläche des Substrats unter Bildung eines Films aufgebracht wird, der Licht mit einer Wellenlänge von nicht mehr als 380 nm absorbiert, und daß man danach auf

diese Schicht eine aushärtbare Masse aufträgt und diese Masse aushärtet.

8. Verfahren nach Anspruch 7, dadurch gekennzeichnet, daß die aushärtbare Masse ein Abdichtungsmittel ist.

9. Verfahren nach Anspruch 8, dadurch gekennzeichnet, daß das Abdichtungsmittel ein modifiziertes Silikon, ein Urethan oder ein Polysulfid ist.

**Revendications**

1. Composition de revêtement, en particulier pour du verre, comprenant un formateur de pellicule et un absorbeur d'ultraviolet capable d'absorber une lumière ayant une longueur d'ondes ne dépassant pas 380 nm, caractérisé en ce que ledit formateur de pellicule est un prépolymère de diallylphtalate modifiée par du silicium, une résine époxy modifiée par du silicium, un polymère acrylique modifié par du silicium ou leur mélange.

2. Composition selon la revendication 1, caractérisé en ce que ledit formateur de pellicule contient en outre un polyisocyanate, un polyisocyanate modifié par du silicium, un agent de couplage de silane, un produit de la réaction d'agents de couplage de silane et leurs mélanges dans une proportion plus faible que le composé de la revendication 1.

3. Composition selon la revendication 1 ou 2, caractérisée en ce que le formateur de pellicule contient en outre un polymère caoutchouteux.

4. Composition selon la revendication 3, caractérisé en ce que le polymère caoutchouteux est un polyéther modifié par du silicium.

5. Composition selon l'une quelconque des revendications 1 à 4, caractérisé en ce que la solution comprend en outre au moins 0,1% en poids d'un pigment ou d'un colorant.

6. Composition selon l'une quelconque des revendications 1 à 5, caractérisé en ce que la solution contient un absorbeur d'ultraviolet en une quantité de 3 à 30% en poids.

7. Procédé pour l'adhésion d'une composition durcissable à un substrat, en particulier du verre, caractérisé en ce qu'on recouvre tout d'abord la surface du substrat avec une composition selon l'une quelconque des revendications 1 à 6, qui comprend un formateur de pellicule et un absorber d'ultraviolet, afin de former une pellicule capable d'absorber de la lumière ayant une longueur d'ondes ne dépassant pas 380 nm, et qu'on recouvre ensuite la surface de la première composition avec une composition.

8. Procédé selon la revendication 7, caractérisé en ce que la composition durcissable est un agent d'étanchéité.

9. Procédé selon la revendication 8, caractérisé en ce que ledit agent d'étanchéité est un agent d'étanchéité du type silicone modifié, un agent d'étanchéité de type uréthanne ou un agent d'étanchéite de type polysulfure.

Fig. 1

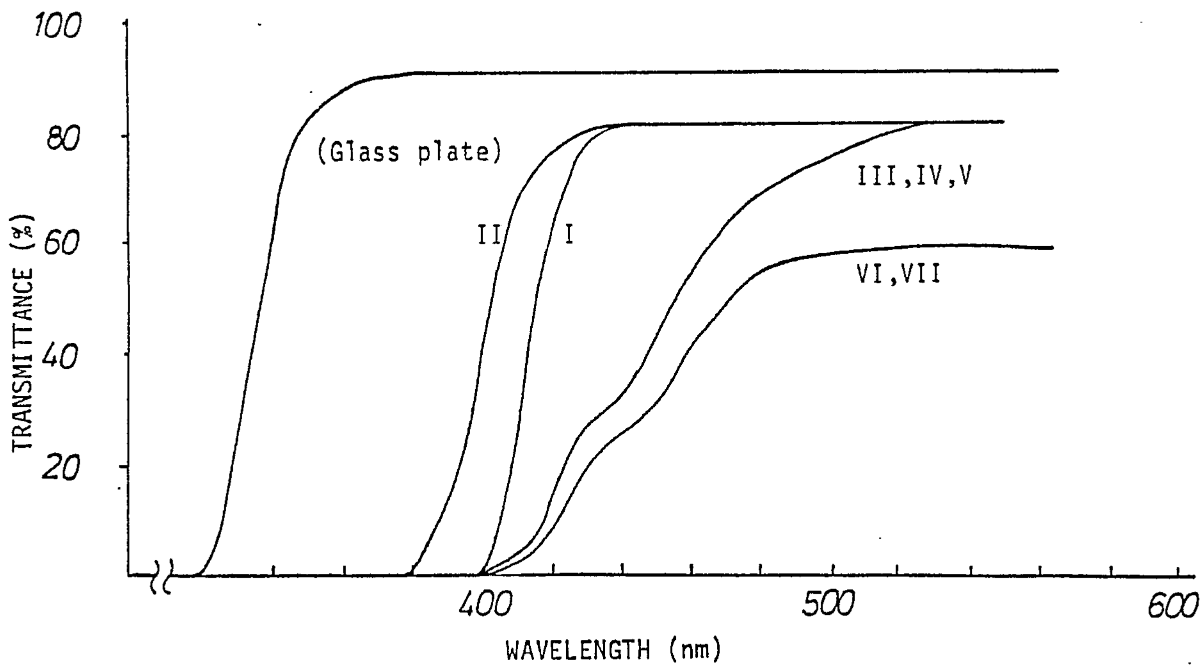
100
80
60
40
20
TRANSMITTANCE (%)
(Glass plate)
II
I
III,IV,V
VI,VII
400
500
600
WAVELENGTH (nm)